# EUROPEAN PATENT SPECIFICATION

(11) **EP 3 861 150 B1**
(45) Date of publication and mention of the grant of the patent: **02.04.2025**
(21) Application number: 19868848.3
(22) Date of filing: 06.09.2019
(51) Int. Cl.: C23F 11/08, C23F 11/14, C09K 5/10, F22B 37/02, C09K 15/30, C23F 11/02

(54) **METHOD OF CONTROLLING CORROSION IN AN AQUEOUS HEAT TRANSFER SYSTEM BY THE PARTIAL DECOMPOSITION OF THE MORPHOLINE GENERATING AGENT IN THE AQUEOUS HEAT TRANSFER SYSTEM TO FORM MORPHOLINE INSITU**
VERFAHREN ZUR KONTROLLE DER KORROSION IN EINEM WÄSSRIGEN WÄRMEÜBERTRAGUNGSSYSTEM DURCH DIE TEILWEISE ZERSETZUNG DES MORPHOLINERZEUGENDEN MITTELS IN DEM WÄSSRIGEN WÄRMEÜBERTRAGUNGSSYSTEM ZUR BILDUNG VON MORPHOLIN IN SITU
MÉTHODE DE CONTRÔLE DE LA CORROSION DANS UN SYSTÈME DE TRANSFERT DE CHALEUR AQUEUX PAR LA DÉCOMPOSITION PARTIELLE DE L'AGENT GÉNÉRATEUR DE MORPHOLINE DANS LE SYSTÈME DE TRANSFERT DE CHALEUR AQUEUX POUR FORMER DE LA MORPHOLINE INSITU

(30) Priority: 04.10.2018 US 201862741113 P
(43) Date of publication of application: 11.08.2021
(73) Proprietor: Huntsman Petrochemical LLC, The Woodlands, TX 77380 (US)
(72) Inventor: CHAMPION, Donald, The Woodlands, Texas 77380 (US); FANFAIR, Dayne Dustan, The Woodlands, Texas 77380 (US)
(74) Representative: Roberts, Philippa Grace
(86) International application number: PCT/US2019/049837
(87) International publication number: WO 2020/072172

(56) References cited:
- EP-A1- 0 541 317
- US-A- 2 580 923
- US-A- 2 580 923
- US-A- 4 681 737
- US-A- 4 681 737
- US-A- 4 905 721
- US-A- 5 176 849
- US-A1- 2016 096 908
- US-A1- 2016 096 908
- US-B1- 6 585 933
- US-B2- 6 540 923

## Description

### Field of the Invention

This disclosure relates generally to corrosion control methods using organic amines, especially in aqueous heat transfer systems.

### Background

Amines are widely used in aqueous heat transfer systems to mitigate corrosion. Amines may mitigate corrosion by controlling the pH of the system and neutralizing the acids that may be present in the system's aqueous phase. Amines are typically chosen based upon their effective pKb (strength), neutralization efficiency (equivalent mass), volatility, and solubility. Volatile amines are effective because they travel with steam and condense with water as the steam condenses to control corrosion at locations remote to the boiler. Several amines are used, often in combination, to effectively cover the range of conditions that may be present in a steam or water line. Typical amines used include cyclohexylamine, morpholine, 2-amino-2-methyl-1-propanol, diethylethanolamine (diethylaminoethanol or DEAE), monoethanolamine (MEA), dimethylisopropanolamine, and methoxypropylamine (MOPA). Less commonly used amines are monomethylethanolamine (MMEA), methyl diethanolamine (MDEA), and diethanolamine (DEA). Film forming amines are sometimes used to protect surfaces from corrosion and are normally less volatile, remaining in the liquid phase instead of presenting in the gas phase (steam).

Amine stability under the conditions of use is an important consideration as decomposition may show different characteristics than the amine intended for use, or the amine may be completely decomposed and therefore ineffective. Decomposition to ammonia or other very volatile amines may present a problem as they may be ejected from a steam heat transfer system if opened to the atmosphere as in a boiler blow down. Morpholine has been shown to be relatively stable. However, morpholine, a widely used amine, has recently come under pressure to be replaced for safety handling reasons.

US 2580923 discloses a method for controlling corrosion in an aqueous heat transfer system, such as a boiler system, by adding to boiler feed water a morpholine generating agent, such as a morpholine salt, namely, 2-naphthalene sulfonate of morpholine, and forming morpholine in situ by partial decomposition of the morpholine salt in the boiler system.

### Summary

It would be an advantage to have morpholine in an aqueous heat transfer system to help control corrosion without having to handle morpholine itself when introducing it into the system.

According to an aspect of the present disclosure, a method of controlling corrosion in an aqueous heat transfer system is disclosed in claim 1. The method includes adding a morpholine generating agent to the aqueous heat transfer system and forming morpholine in situ by partial decomposition of the morpholine generating agent in the aqueous heat transfer system.

The morpholine generating agent is aminopropylmorpholine or is selected from aminoethylmorpholine, hydroxyethylmorpholine, bis(morpholino)ethane, bis(2-morpholinoethyl) ether, α-morpholino-ω-hydroxy-poly(oxy-1,2-ethylene), α, ω-bis(morpholino) poly(oxy-1,2-ethylene), and combinations thereof.

In an embodiment of the present disclosure, the aqueous heat transfer system is a boiler system.

According to some embodiments of the present disclosure, forming morpholine in situ by partial decomposition of the morpholine generating agent includes heating the morpholine generating agent to a temperature sufficient to at least partially decompose the morpholine generating agent.

In embodiments of the present disclosure, forming morpholine in situ by partial decomposition of the morpholine generating agent includes heating an aqueous heat transfer system containing the morpholine generating agent to a temperature sufficient to at least partially decompose the morpholine generating agent into morpholine.

In some embodiments of the present disclosure, the partial decomposition of the morpholine generating agent occurs at a temperature equal to or greater than about 150° C.

In embodiments of the present disclosure, the partial decomposition of the morpholine generating agent occurs at a temperature equal to or greater than about 200° C.

In embodiments of the present disclosure, the partial decomposition of the morpholine generating agent occurs at autogenous pressure.

According to some embodiments of the present disclosure, the method further includes adding an oxygen scavenger to the aqueous heat transfer system.

In some embodiments of the present disclosure, the oxygen scavenger is selected from hydrazine, carbohydrazide, hydroquinone, 1-aminopyrrolidine, 1-amino-4-methylpiperazine, N,N-diethylhydroxylamine, isopropylhydroxylamine, erythorbic acid and a salt thereof, ascorbic acid and a salt thereof, and combinations thereof.

In other embodiments of the present disclosure, the method further includes adding a phosphate salt to the aqueous heat transfer system.

### Detailed Description

As utilized in accordance with the present disclosure, the following terms, unless otherwise indicated, shall be understood to have the following meanings.

If appearing herein, the term "comprising" and derivatives thereof are not intended to exclude the presence of any additional component, step or procedure, whether or not the same is disclosed herein. In order to avoid any doubt, all compositions claimed herein through use of the term "comprising" may include any additional additive or compound, unless stated to the contrary. In contrast, the term, "consisting essentially of" if appearing herein, excludes from the scope of any succeeding recitation any other component, step or procedure, except those that are not essential to operability and the term "consisting of", if used, excludes any component, step or procedure not specifically delineated or listed. The term "or", unless stated otherwise, refers to the listed members individually as well as in any combination.

The articles "a" and "an" are used herein to refer to one or to more than one (i.e. to at least one) of the grammatical objects of the article. By way of example, "an olefin" means one olefin or more than one olefin.

The phrases "in one embodiment", "according to one embodiment", "in embodiments of the present disclosure", "according to some embodiments", and the like generally mean the particular feature, structure, or characteristic following the phrase is included in at least one embodiment of the present disclosure, and may be included in more than one embodiment of the present disclosure. Importantly, such phrases do not necessarily refer to the same embodiment. If the specification states a component or feature "may", "can", "could", or "might" be included or have a characteristic, that particular component or feature is not required to be included or have the characteristic.

Throughout this disclosure, the term "about" is used to indicate that a value includes the inherent variation of error for the quantifying device, mechanism, or method, or the inherent variation that exists among the subject(s) to be measured. For example, but not by way of limitation, when the term "about" is used, the designated value to which it refers may vary by plus or minus ten percent, or nine percent, or eight percent, or seven percent, or six percent, or five percent, or four percent, or three percent, or two percent, or one percent, or one or more fractions therebetween.

The phrases "and mixtures thereof", "or combinations thereof" and "and combinations thereof" as used herein refers to all permutations and combinations of the listed items preceding the term. For example, "A, B, C, or combinations thereof" is intended to include at least one of: A, B, C, AB, AC, BC, or ABC and, if order is important in a particular context, also BA, CA, CB, CBA, BCA, ACB, BAC, or CAB. Continuing with this example, expressly included are combinations that contain repeats of one or more items or terms such as BB, AAA, CC, AABB, AACC, ABCCCC, CBBAAA, CABBB, and so forth. The skilled artisan will understand that typically there is no limit on the number of items or terms in any combination, unless otherwise apparent from the context. In the same light, the terms "or combinations thereof" and "and combinations thereof" when used with the phrases "selected from" or "selected from the group consisting of' refers to all permutations and combinations of the listed items preceding the phrase.

In embodiments of the present disclosure, a method of controlling corrosion in an aqueous heat transfer system is provided. The method adds a morpholine generating agent to the aqueous heat transfer system. The method forms morpholine in situ either by partial or complete decomposition of the morpholine generating agent in the aqueous heat transfer system.

Thus, the feed of the morpholine generating agent into the aqueous heat transfer system allows for the advantages of having morpholine in the system to help control corrosion without having to directly handle morpholine itself when introducing it into the system.

In embodiments of the present invention, an aqueous heat transfer system is provided. The aqueous heat transfer system may comprise any number of boiler/steam/condensate systems. For example, the system may generate steam to power a turbine. These systems heat water to generate steam that is then used for various purposes. These aqueous heat transfer systems are high temperature applications where a more stable amine (such as morpholine) may be advantageous. In an embodiment of the present invention, the aqueous heat transfer system is a boiler system. In other embodiments, the aqueous heat transfer system may be a pressurized water reactor steam generator as used in power plants. In some embodiments, the aqueous heat transfer system may be a HVAC (building heating and air conditioning) system.

In embodiments of the present invention, the method adds a morpholine generating agent to the aqueous heat transfer system. Here the morpholine generating agent may be added to the aqueous phase present in the aqueous heat transfer system, such as to the feed water of the boiler system.

Embodiments of the present disclosure provide a morpholine generating agent. The morpholine generating agent is aminopropylmorpholine. Aminopropylmorpholine will partially degrade into morpholine under autogenous conditions of an aqueous heat transfer system. In other embodiments, the morpholine generating agent is selected from the group consisting of aminoethylmorpholine, hydroxyethylmorpholine, bis(morpholino)ethane, bis(2-morpholinoethyl) ether, α-morpholino-ω-hydroxy-poly(oxy-1,2-ethylene), α, ω - bis(morpholino) poly(oxy-1,2-ethylene), and combinations thereof.

The morpholine generating agent may be used in the aqueous heat transfer system at various concentrations depending on the amine strength, equivalent weight and the desired pH of the aqueous heat transfer system. In embodiments of the present invention, the morpholine generating agent may be used in concentrations of up to 0.5% (5000 ppm) in the aqueous heat transfer system. In other embodiments, the morpholine generating agent may be used in concentrations of 0.1% (1000 ppm) in the aqueous heat transfer system.

Embodiments of the present disclosure form morpholine in situ by partial decomposition of the morpholine generating agent in the aqueous heat transfer system. In an embodiment of the present disclosure, the method forms morpholine in situ by partial decomposition of the morpholine generating agent by heating the morpholine generating agent to a temperature sufficient to at least partially decompose the morpholine generating agent. In an embodiment of the present disclosure, the method forms morpholine in situ by partial decomposition of the morpholine generating agent by heating an aqueous heat transfer system containing the morpholine generating agent to a temperature sufficient to at least partially decompose the morpholine generating agent into morpholine.

In embodiments of the present disclosure, the heat and pressure of the aqueous heat transfer system at least partially decompose the morpholine generating agent into morpholine.

In embodiments of the present disclosure, the partial decomposition of the morpholine generating agent occurs at a temperature equal to or greater than about 150° C. In other embodiments, the partial decomposition of the morpholine generating agent occurs at a temperature equal to or greater than about 175° C. In other embodiments, the partial decomposition of the morpholine generating agent occurs at a temperature equal to or greater than about 200° C. In other embodiments, the partial decomposition of the morpholine generating agent occurs at a temperature equal to or greater than about 225° C. In other embodiments, the partial decomposition of the morpholine generating agent occurs at a temperature equal to or greater than about 250° C. In other embodiments, the partial decomposition of the morpholine generating agent occurs at a temperature equal to or greater than about 255° C. In other embodiments, the partial decomposition of the morpholine generating agent occurs at a temperature equal to or greater than about 275° C. In embodiments of the present disclosure, the partial decomposition of the morpholine generating agent occurs at a temperature equal to or greater than about 300° C, 325° C, 350° C, 375° C, 400° C, 425° C, 450° C, 475° C, 500° C, 525° C, 550° C, 575° C, or 600° C. In other embodiments, the partial decomposition of the morpholine generating agent occurs at a temperature equal to about 620° C.

In embodiments of the present invention, the partial decomposition of the morpholine generating agent occurs at autogenous pressure.

The morpholine generating agent partially decomposes to form morpholine, a relatively stable amine, that will provide corrosion control in the aqueous heat transfer system. Thus, morpholine may be produced in situ in the aqueous heat transfer system without having to handle morpholine as a raw material when adding it to the system.

In embodiments of the present disclosure, the method further includes adding an oxygen scavenger to the aqueous heat transfer system. Oxygen scavengers may include hydrazine, carbohydrazide, hydroquinone, 1-aminopyrrolidine, 1-amino-4-methylpiperazine, N,N-diethylhydroxylamine, isopropylhydroxylamine, erythorbic acid and a salt thereof, ascorbic acid and a saltthereof, and combinations thereof. Examples of a salts of erythoribic acid include sodium erythorbate and potassium erythorbate. Examples of salts of ascorbic acid include sodium ascorbate and potassium ascorbate.

In embodiments of the present disclosure, the method further comprises adding a phosphate salt to the aqueous heat transfer system. Phosphate salts are typically good for buffering aqueous heat transfer systems to an alkaline pH. Examples of phosphate salts include disodium hydrogen phosphate and potassium dihydrogen phosphate.

Embodiments of the present disclosure are further illustrated by the following examples. However, the following non-limiting examples are not intended to be all-inclusive and are not intended to limit the scope of the invention as described in the appended claims.

### EXAMPLES

### Example 1 : Aminopropylmorpholine Thermal Stability in Water

A solution of water, 250 grams (g), and N-(3-aminopropyl)morpholine, 0.36 g, were placed in a 300 cubic centermeter (cc) autoclave. The amine concentration was 1400 parts per million (ppm). After purging the autoclave with nitrogen, the resulting solution was sampled. Next the solution was heated to about 255°C. At various intervals, the reactor was cooled to 120°C, sampled and reheated again to about 255°C. The process was continued at intervals of 1.6, 5.4, 8.2, 12.1, 15.2 and 20.1 days (not including heat up and cool down). The samples were analyzed by ion chromatography for anions and cations (amines). The accompanying Table 1 demonstrates the production of morpholine from N-(3-aminopropyl)-morpholine and further, that the morpholine produced is relatively stable.

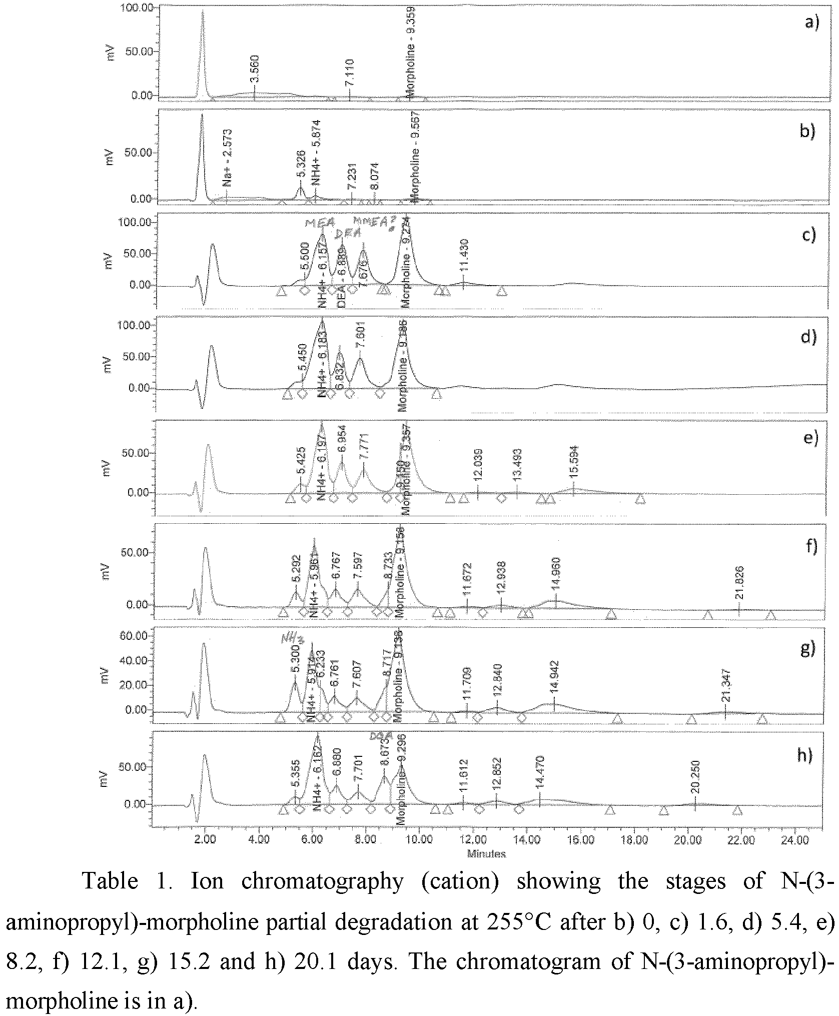

While certain features of this invention have been described in detail with respect to various embodiments thereof, it will, of course, be apparent that other modifications can be made within the scope of the invention, and it is not intended to limit this invention to the exact detail shown above except insofar as they are defined in the following claims.

## Claims

1. A method of controlling corrosion in an aqueous heat transfer system, comprising:
adding a morpholine generating agent to an aqueous heat transfer system; and
forming morpholine in situ by partial decomposition of the morpholine generating agent in the aqueous heat transfer system, wherein the morpholine generating agent comprises aminopropylmorpholine , or is selected from the group consisting of: aminoethylmorpholine, hydroxyethylmorpholine, bis(morpholino)ethane, bis(2-morpholinoethyl) ether, α-morpholino-ω-hydroxy-poly(oxy-1,2-ethylene), α, ω -bis(morpholino) poly(oxy-1,2-ethylene), and combinations thereof.

2. The method of claim 1, wherein the aqueous heat transfer system is a boiler system.

3. The method of claim 1, wherein forming morpholine in situ by partial decomposition of the morpholine generating agent comprises heating the morpholine generating agent to a temperature sufficient to at least partially decompose the morpholine generating agent.

4. The method of claim 1, wherein forming morpholine in situ by partial decomposition of the morpholine generating agent comprises heating an aqueous heat transfer system containing the morpholine generating agent to a temperature sufficient to at least partially decompose the morpholine generating agent into morpholine.

5. The method of claim 1, wherein the partial decomposition of the morpholine generating agent occurs at a temperature equal to or greater than about 150° C.

6. The method of claim 1, wherein the partial decomposition of the morpholine generating agent occurs at a temperature equal to or greater than about 200° C.

7. The method of claim 1, wherein the partial decomposition of the morpholine generating agent occurs at autogenous pressure.

8. The method of claim 1, wherein the method further comprises adding an oxygen scavenger to the aqueous heat transfer system.

9. The method of claim 8, wherein the oxygen scavenger is selected from the group consisting of: hydrazine, carbohydrazide, hydroquinone, 1-aminopyrrolidine, 1-amino-4-methylpiperazine, N,N-diethylhydroxylamine, isopropylhydroxylamine, erythorbic acid and a salt thereof, ascorbic acid and a salt thereof, and combinations thereof.

10. The method according to claim 1, wherein the method further comprises adding a phosphate salt to the aqueous heat transfer system.

## Patentansprüche

1. Verfahren zum Kontrollieren von Korrosion in einem wässrigen Wärmeübertragungssystem, umfassend:
Hinzufügen eines Morpholin erzeugenden Mittels zu einem wässrigen Wärmeübertragungssystem, und
Ausbilden von Morpholin in situ durch teilweise Zersetzung des Morpholin erzeugenden Mittels in dem wässrigen Wärmeübertragungssystem, wobei das Morpholin erzeugende Mittel Aminopropylmorpholin umfasst oder aus der Gruppe ausgewählt ist, bestehend aus: Aminoethylmorpholin, Hydroxyethylmorpholin, Bis(morpholino)ethan, Bis(2-morpholinoethyl)ether, α-Morpholino-ω-hydroxy-poly(oxy-1,2-ethylen), α, ω-Bis(morpholino)poly(oxy-1,2-ethylen) und Kombinationen davon.

2. Verfahren nach Anspruch 1, wobei das wässrige Wärmeübertragungssystem ein Kesselsystem ist.

3. Verfahren nach Anspruch 1, wobei das Ausbilden von Morpholin in situ durch teilweise Zersetzung des Morpholin erzeugenden Mittels das Erhitzen des Morpholin erzeugenden Mittels auf eine Temperatur umfasst, die ausreicht, um das Morpholin erzeugende Mittel mindestens teilweise zu zersetzen.

4. Verfahren nach Anspruch 1, wobei das Ausbilden von Morpholin in situ durch teilweise Zersetzung des Morpholin erzeugenden Mittels das Erhitzen eines wässrigen Wärmeübertragungssystems, das das Morpholin erzeugende Mittel enthält, auf eine Temperatur umfasst, die ausreicht, um das Morpholin erzeugende Mittel mindestens teilweise in Morpholin zu zersetzen.

5. Verfahren nach Anspruch 1, wobei das teilweise Zersetzen des Morpholin erzeugenden Mittels bei einer Temperatur von gleich oder größer als etwa 150° C stattfindet.

6. Verfahren nach Anspruch 1, wobei das teilweise Zersetzen des Morpholin erzeugenden Mittels bei einer Temperatur von gleich oder höher als etwa 200° C stattfindet.

7. Verfahren nach Anspruch 1, wobei das teilweise Zersetzen des Morpholin erzeugenden Mittels bei autogenem Druck erfolgt.

8. Verfahren nach Anspruch 1, wobei das Verfahren ferner das Hinzufügen eines Sauerstofffängers zu dem wässrigen Wärmeübertragungssystem umfasst.

9. Verfahren nach Anspruch 8, wobei der Sauerstofffänger ausgewählt ist aus der Gruppe bestehend aus: Hydrazin, Carbohydrazid, Hydrochinon, 1-Aminopyrrolidin, 1-Amino-4-methylpiperazin, N,N-Diethylhydroxylamin, Isopropylhydroxylamin, Erythorbinsäure und einem Salz davon, Ascorbinsäure und einem Salz davon und Kombinationen davon.

10. Verfahren nach Anspruch 1, wobei das Verfahren ferner das Hinzufügen eines Phosphatsalzes zu dem wässrigen Wärmeübertragungssystem umfasst.

## Revendications

1. Procédé de lutte contre la corrosion dans un système de transfert de chaleur aqueux, comprenant :
l'ajout d'un agent générateur de morpholine à un système de transfert de chaleur aqueux ; et
la formation de morpholine in situ par décomposition partielle de l'agent générateur de morpholine dans le système de transfert de chaleur aqueux, dans lequel l'agent générateur de morpholine comprend de l'aminopropylmorpholine, ou est choisi dans le groupe constitué par : aminoéthylmorpholine, hydroxyéthylmorpholine, bis(morpholino)éthane, éther de bis(2-morpholinoéthyle), α-morpholino-ω-hydroxy-poly(oxy-1,2-éthylène), α, ω -bis(morpholino) poly(oxy-1,2-éthylène), et combinaisons de ceux-ci.

2. Procédé selon la revendication 1, dans lequel le système de transfert de chaleur aqueux est un système de chaudière.

3. Procédé selon la revendication 1, dans lequel la formation de morpholine in situ par décomposition partielle de l'agent générateur de morpholine comprend le chauffage de l'agent générateur de morpholine à une température suffisante pour décomposer au moins partiellement l'agent générateur de morpholine.

4. Procédé selon la revendication 1, dans lequel la formation de morpholine in situ par décomposition partielle de l'agent générateur de morpholine comprend le chauffage d'un système de transfert de chaleur aqueux contenant l'agent générateur de morpholine à une température suffisante pour décomposer au moins partiellement l'agent générateur de morpholine en morpholine.

5. Procédé selon la revendication 1, dans lequel la décomposition partielle de l'agent générateur de morpholine se produit à une température égale ou supérieure à environ 150 °C.

6. Procédé selon la revendication 1, dans lequel la décomposition partielle de l'agent générateur de morpholine se produit à une température égale ou supérieure à environ 200 °C.

7. Procédé selon la revendication 1, dans lequel la décomposition partielle de l'agent générateur de morpholine se produit à pression autogène.

8. Procédé selon la revendication 1, dans lequel le procédé comprend en outre l'ajout d'un capteur d'oxygène au système de transfert de chaleur aqueux.

9. Procédé selon la revendication 8, dans lequel le capteur d'oxygène est choisi dans le groupe constitué par : hydrazine, carbohydrazide, hydroquinone, 1-aminopyrrolidine, 1-amino-4-méthylpipérazine, N,N-diéthylhydroxylamine, isopropylhydroxylamine, acide érythorbique et un sel de celui-ci, acide ascorbique et un sel de celui-ci, et combinaisons de ceux-ci.

10. Procédé selon la revendication 1, dans lequel le procédé comprend en outre l'ajout d'un sel phosphate au système de transfert de chaleur aqueux.
